# EUROPEAN PATENT SPECIFICATION

(11) **EP 2 502 789 B1**
(45) Date of publication and mention of the grant of the patent: **18.05.2016**
(21) Application number: 10831522.7
(22) Date of filing: 15.11.2010
(51) Int. Cl.: H04L 12/417, H04L 12/413

(54) **METHOD OF SETTING TRANSMISSION TIMING OF MESSAGES TO BE TRANSMITTED**
VERFAHREN ZUR EINSTELLUNG DER ÜBERTRAGUNGSZEIT VON ZU ÜBERTRAGENDEN NACHRICHTEN
PROCÉDÉ PERMETTANT DE RÉGLER LA SYNCHRONISATION DE TRANSMISSION DE MESSAGES DEVANT ÊTRE TRANSMIS

(30) Priority: 20.11.2009 JP 2009264627
(43) Date of publication of application: 26.09.2012
(73) Proprietor: Bosch Corporation, Tokyo 150-8360 (JP)
(72) Inventor: HAYASHI Takanori, Yokohama-shi Kanagawa 224-8501 (JP); TAKEKAWA Yoriyuki, Yokohama-shi Kanagawa 224-8501 (JP); SANADA Keisho, Yokohama-shi Kanagawa 224-8501 (JP)
(74) Representative: DREISS Patentanwälte PartG mbB
(86) International application number: PCT/JP2010/070263
(87) International publication number: WO 2011/062128

(56) References cited:
- JP-A- 5 208 012
- JP-A- 6 181 470
- JP-A- 2007 184 833
- SCHMIDT K ET AL: "Systematic Message Schedule Construction for Time-Triggered CAN", IEEE TRANSACTIONS ON VEHICULAR TECHNOLOGY, IEEE SERVICE CENTER, PISCATAWAY, NJ, US, vol. 56, no. 6, 1 November 2007 (2007-11-01), pages 3431-3441, XP011194791, ISSN: 0018-9545, DOI: 10.1109/TVT.2007.906413
- ROGER JOHANSON: "Time and event triggered communication scheduling for the CAN bus", JOURNAL OF NETWORK AND COMPUTER APPLICATIONS, ACADEMIC PRESS, NEW YORK, NY, US , 1 February 2005 (2005-02-01), pages 143-168, XP002509952, ISSN: 1084-8045 Retrieved from the Internet: URL:http://www.chl.chalmers.se/~roger/misc /paper%20G.pdf [retrieved on 2009-01-22]

## Description

### Technical Field

The present invention relates to setting transmission timing of messages having various cycles to be transmitted and received between plural electronic devices or between plural circuits within an electronic device, particularly, aiming at achieving communication load balancing and the like.

### Background Art

Conventionally, for example, in electroncally controlled devices in a vehicle including electronc controllers, it is well known that transmission and receiving of various messages between the controllers are performed through an in-vehicle LAN called CAN (for example, see Patent Document 1).

Schmidt K et al: "Systematic Message Schedule Construction for Time-Triggered CAN", ISSN: 0018-9545, pages 3431-3441, discloses a time-triggered CAN (TTCAN), which achieves time-triggered behavior by implementing time-division multiple access on the existing CAN network standard.

Roger Johanson: "Time and event triggered communcation scheduling for the CAN bus", ISSN: 1084-8045, pages 143-168 discloses a method for message scheduling and analysis in real time systems using TTCAN/CAN hybrid communication systems.

By the way, in such CAN communication, plural messages from various sections are simultaneously transmitted to a CAN driver and delivered from the CAN driver to the respective destinations, normally in plural predetermined cycles.

However, since these messages are transmitted to the CAN driver at various timings independent of one another, some of the messages may accidentally reach the CAN driver at the same time, exceeding the transmission capability of the CAN driver, in which, since the transmission is performed in sequence within the transmission capability of the CAN driver, some messages may be queued, causing a variation in the transmission cycles. Such a variation in the transmission cycles may raise a problem of causing reduction in accuracy of various computations, timing error in the circuit operations or the like on the receiving sides expecting receiving of messages normally in constant cycles.

For example, one solution to such a problem may be to expand the functionality of the peripheral circuits including the CAN driver to relieve the congestion of messages to be delivered as much as possible. However, an additional peripheral circuit may lead to higher cost of the devices as well as more complicated configuration, which is not necessarily an appropriate solution.

Also, the above-mentioned Patent Document 1 discloses a configuration including a unit for adjusting, setting and managing transmission timing in order to avoid collision of messages in CAN communication. However, this configuration requires an additional unit dedicated to adjusting, setting and managing transmission timing, which may lead to more complicated configuration and higher cost of the devices. In addition, this configuration may indeed avoid collision of plural messages, but is not based on aiming at achieving communication load balancing, and so, is not necessarily satisfactory.

Patent document 1: Japanese Patent Application Laid-open No. 2007-184833

### Disclosure of the Invention

### Problems to be Solved by the Invention

In view of the above, the present invention is intended to provide a method for setting transmission timing of messages that allows achieving communication load balancing without providing an additional circuit and so as to minimize reduction in the number of messages to be transmitted.

### Means for Solving the Problems

In accordance with an aspect of the invention, a method for setting transmission timing of messages by allocating transmission timing to plural messages with predetermined various transmission cycles is provided, the method including the successive steps of:
grouping the messages by transmission cycle into transmission cycle subgroups in each of which the maximum number of messages that can be included is determined by a predetermined criterion for grouping by transmission cycle;
arbitrarily setting an order of the grouped transmission cycle subgroups and arbitrarily setting an order of messages included in each of the transmission cycle subgroups; and
(i) setting a transmission grid corresponding to the number of the grouped transmission cycle subgroups; (ii) selecting one message according to the set order of the messages, in the set order of the transmission cycle subgroups, based on the transmission grid; (iii) allocating the selected message; and (iv) repeating the step of (ii) to (iii) until the allocation of the messages of all the transmission cycle subgroups completes.

### Advantage of the Invention

According to the invention, in a design phase of equipment, transmission timings of plural messages are set as to achieve communication load balancing among the plural messages, which eliminates the need for an additional hardware, such as a buffer circuit for reducing communication load and the like, and allows a circuit for controlling transmission of the messages, represented by a microcomputer, to have relatively low processing capability. So, according to the invention, a circuit having high processing capability for reducing communication load of the messages is not required, leading to a simplified and low-cost apparatus.

### Brief Description of Drawings

FIG. 1 is a configuration diagram showing a configuration example of a vehicle behavior controlling apparatus as an example of a network to which the method for setting transmission timing of messages in accordance with an embodiment of the invention is applied.
FIG. 2 is a flowchart illustrating a process of setting transmission timing according to the method for setting transmission timing of messages in accordance with the embodiment of the invention.
FIG. 3 is an illustrative drawing illustrating a specific example of setting transmission timing according to the method for setting transmission timing of messages in accordance with the embodiment of the invention.

### Description of Reference Numerals and Signs

### Explanation of Codes

- 1-1 to 1-n: Electronic controlling units
- 2: CAN bus

### Description of Specific Embodiment

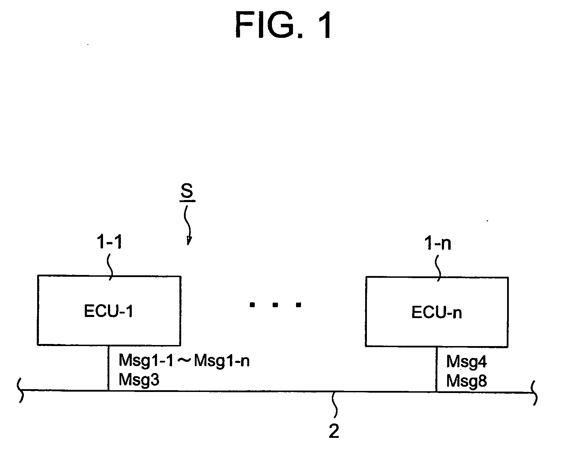

Hereinafter, embodiments of the present invention will be described with reference to FIG. 1 to FIG: 3.

It should be noted that the members, arrangements and the like described below are not intended to limit the invention and may be varied without departing the spirit of the invention.

First, an overview of a method for setting transmission timing of messages in accordance with the embodiment of the invention is described.

The method for setting transmission timing of messages in accordance with the embodiment of the invention is, for example, to provide a technique for setting transmission timing of messages to be transmitted and received between various sections in a vehicle behavior controlling apparatus using a CAN (Controller Area Network) communication, in the design phase of the apparatus, while achieving communication load balancing and minimizing reduction in the number of messages to be transmitted.

As a configuration example of an apparatus to which the method for setting transmission timing of messages in accordance with the embodiment of the invention is applied, Fig. 1 shows an example of schematic configuration of a vehicle behavior controlling apparatus S. Then, the description is made with reference to Fig. 1.

The vehicle behavior controlling apparatus S includes plural electronic controlling units (labeled "ECU-1" and "ECU-n" in Fig. 1) 1-1 to 1-n, which transmit/receive a message to/from each other when needed. It should be noted the term "message" refers to a digital signal including not only what is called a message but also various data and the like.

In the configuration example in Fig. 1, CAN communication is used to transmit and receive messages between the electronic controlling units 1-1 to 1-n. The electronic controlling units 1-1 to 1-n can transmit and receive messages through a CAN bus (Can Bus) 2.

For messages to be transmitted to the outside by the electronic controlling units 1-1 to 1-n, the setting of their transmission cycles is not subject to any particular limitation and may be set as appropriate by the individual electronic controlling unit 1-1 to 1-n.

Also, for example, in addition to their respective transmission cycles, it is predetermined that the first electronic controlling unit 1-1 outputs three types of messages Msg 1-1 ∼ Msg 1-n and Msg 1-2, and Msg 3 electronic controlling unit 1-n outputs two types of messages Msg 1-4 and Msg 8.

The method for setting transmission timing of messages in accordance with the embodiment of the invention is to, in the design phase of the vehicle behavior controlling apparatus S configured as above, perform allocation of transmission timings of messages to be transmitted by the electronic controlling units 1-1 to 1-n from the viewpoint of achieving communication load balancing and the like. Thus, by performing such allocation of transmission timings, the method, unlike conventional methods, allows constructing the apparatus without providing thereto a circuit dedicated to adjusting transmission timing of messages.

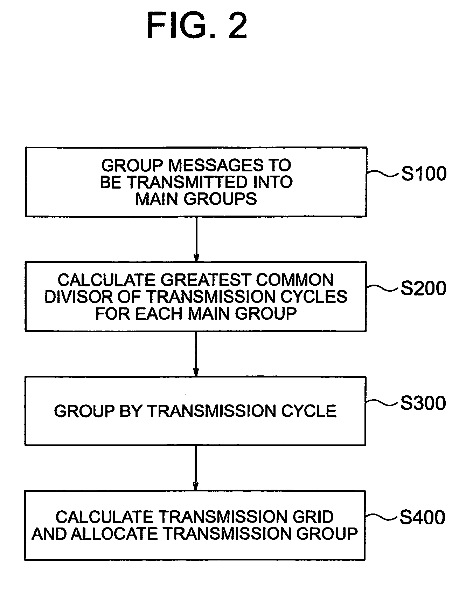

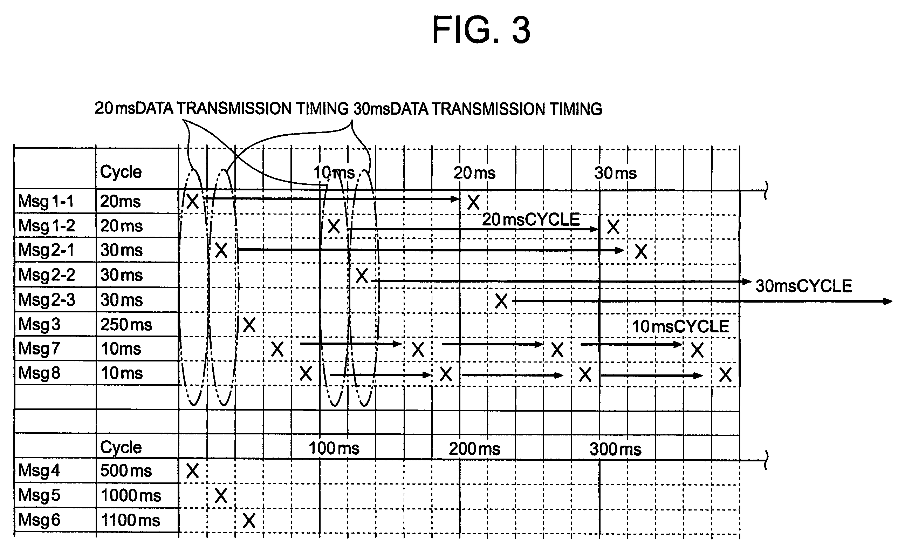

Now, a process of setting transmission timing according to the method for setting transmission timing of messages in accordance with the embodiment of the invention is specifically described with reference to Figs. 2 and 3.

As a precondition to the process, the transmission cycles of messages to be transmitted by the electronic controlling unit 1-1 to 1-n are predetermined under the restriction that the duration for transmitting one message (transmission duration) needs to be within 1 ms.

Also, in a specific example described below, 11 messages are to be transmitted, including: two messages with a transmission cycle of 10 ms; two messages with a transmission cycle of 20 ms; three messages with a transmission cycle of 30 ms; one message with a transmission cycle of 250 ms; one message with a transmission cycle of 500 ms; one message with a transmission cycle of 1000 ms; and one message with a transmission cycle of 1100 ms.

For illustrative purposes, these messages are labeled "Msg" and, as described later in detail, in the specific example, each of the messages is identified by a reference numeral appended to "Msg," the reference numeral indicating grouping by transmission cycle and identification among messages having the same transmission cycle as follows: Msg 1-2, Msg 1-2, Msg 2-1, Msg 2-2, Msg 2-3, Msg 3, Msg 4, Msg 5, Msg 6, Msg 7 and Msg 8 (see Fig. 3).

Now, the process of setting transmission timing is specifically described. First, messages to be transmitted are grouped into main groups by transmission cycle (see step S100 in Fig. 2).

Specifically, in the embodiment of the invention, given messages to be transmitted are grouped by transmission cycle into a group with a shorter transmission cycle and a group with a longer transmission cycle.

More specifically, in the embodiment of the invention, a transmission cycle of 500 ms is selected as a threshold for grouping the messages, then the messages are grouped into a group with a shorter transmission cycle (less than 500 ms) and a group with a longer transmission cycle (more than 500 ms).

As a result, as shown in Fig. 3, the group with the shorter transmission cycle (hereinafter referred to as "the first main group" for illustrative purposes) includes two messages with a transmission cycle of 10 ms, two messages with a transmission cycle of 20 ms, three messages with a transmission cycle of 30 ms and one messages with a transmission cycle of 250 ms.

On the other hand, the group with the longer transmission cycle (hereinafter referred to as "the second main group" for illustrative purposes) includes one messages with a transmission cycle of 500 ms, one messages with a transmission cycle of 1000 ms and one messages with a transmission cycle of 1100 ms.

Such grouping into main groups, so to speak, corresponds to setting of the number of channels in each of which messages are transmitted at the same time (described later in detail).

It should be noted that the number of main groups may not be limited to two, but, for example, three groups with shorter, medium and longer transmission cycles may be used, and, of course, more than three groups may be used.

Also, the transmission cycle as a threshold for grouping into main groups needs to be appropriately set depending on actual values of transmission cycles of the messages. As a matter of course, the threshold is not limited to the above-mentioned 500 ms that is absolutely an example.

For the selection of transmission cycle as threshold, for example, when messages are grouped into two groups by their transmission cycles, the threshold is preferably set to the center between the shortest and longest transmission cycles. When messages are grouped into three groups, the thresholds are preferably set to trisection points between the shortest and longest transmission cycles.

Next, the greatest common divisor of transmission cycles for each main group is calculated (see step S200 in Fig. 2).

First, since the transmission cycles of the messages in the first main group are 10 ms, 20 ms, 30 ms and 250 ms as mentioned above, the greatest common divisor of them is calculated to be 10 ms.

On the other hand, since the transmission cycles of the messages in the second main group are 500 ms, 1000 ms and 1100 ms as mentioned above, the greatest common divisor of them is calculated to be 100 ms (hereinafter referred to as "greatest common divisor cycle").

Next, for each of the two main groups grouped as described above, subgrouping, i.e., grouping by transmission cycle into transmission cycle subgroups is performed (see step S300 in Fig. 2).

That is, for each of the first and second main groups, grouping by transmission cycle into transmission cycle subgroups is performed as described below.

In the embodiment of the invention, in order to group by transmission cycle into transmission cycle subgroups, a criterion for grouping by transmission cycle is predetermined in which the maximum number of messages that can be included in one transmission cycle subgroup (hereinafter referred to as "the number of transmission cycle subgroup messages" for illustrative purposes) is limited to a value to be determined by: [the number of transmission cycle subgroup messages] = [the transmission cycle]/[the greatest common divisor of the transmission cycles]. Accordingly, when there is more messages with the same transmission cycle than the number determined by this expression, the remaining messages are similarly grouped into transmission cycle subgroup per the number determined by: [the number of transmission cycle subgroup messages] = [the transmission cycle]/[the greatest common divisor of the transmission cycles].

With a transmission cycle of 20 ms, the number of transmission cycle subgroup messages is 2 (= [20 ms]/[10 ms]), which means that one transmission cycle subgroup with a transmission cycle of 20 ms can include up to two messages.

Here, the notation for messages in Fig. 3 is described.

First, as described above, a message is denoted by "Msg n-m," in which "Msg" means "message," and "n-m" is appended to "Msg" in order to indicate grouping by transmission cycle and an order within each transmission cycle subgroup.

Specifically, "n" is a number appended from "1" in ascending order in order to identify a transmission cycle subgroup, hereinafter referred to as "transmission cycle subgroup number" for illustrative purposes.

On the other hand, "m" is a number appended from "1" in ascending order in order to identify a message in the same transmission cycle subgroup, hereinafter referred to as "message number" for illustrative purposes.

In the example shown in Fig. 3, just two messages with a transmission cycle of 20 ms are included in the first main group. So, as seen from the above-described expression of the number of transmission cycle subgroup messages, these two messages constitute one transmission cycle subgroup, denoted by Msg 1-1 and Msg 1-2 in the example in Fig. 3. It should be noted that the appending order of "n" of Msg n-m for identifying a transmission cycle subgroup is not subject to any particular limitation, so "n" only have to be appended from "1" in ascending order for the whole of transmission cycle subgroups as described above, and which number for which transmission cycle subgroup may be arbitrary.

This is almost true in "m" of Msg n-m for identifying a message.

Accordingly, in the example in Fig. 3, the first main group includes: messages Msg 1-1 and Msg 1-2 constituting one transmission cycle subgroup with a transmission cycle of 20 ms; messages Msg 2-1 and Msg 2-3 constituting one transmission cycle subgroup with a transmission cycle of 30 ms; a messages Msg 3 constituting one transmission cycle subgroup with a transmission cycle of 250 ms; a messages Msg 7 constituting one transmission cycle subgroup with a transmission cycle of 10 ms; and a messages Msg 8 constituting the other transmission cycle subgroup with a transmission cycle of 10 ms.

On the other hand, the second main group includes: a messages Msg 4 constituting one transmission cycle subgroup with a transmission cycle of 500 ms; a messages Msg 5 constituting one transmission cycle subgroup with a transmission cycle of 1000 ms; and a messages Msg 6 constituting one transmission cycle subgroup with a transmission cycle of 1100 ms.

It should be noted that the messages Msg 3 to Msg 8 constitute the transmission cycle subgroups each consisting of one message, which is based on the expression of the number of transmission cycle subgroup messages as described above. Taking as an example the messages with a transmission cycle of 10 ms of the first main group, since the greatest common divisor for the first main group is 10 ms as determined above, the number of transmission cycle subgroup messages is determined to be 1 (= [10 ms]/[10 ms]) by the expression: [the number of transmission cycle subgroup messages] = [the transmission cycle]/[the greatest common divisor of the transmission cycles].

After grouping by transmission cycle is performed as described above, calculation of a transmission grid (transmission interval) and allocation of transmission timing of a message to the calculated transmission grid are performed (see step S400 in Fig. 2).

First, a transmission timing for each transmission cycle subgroup is set at intervals of the transmission grid predetermined for each main group.

For each main group, the value of a transmission grid (transmission grid value) is set so as to satisfy a first grid value setting condition and a second grid value setting condition at the same time as described below.

First, the first grid value setting condition is that a transmission grid value must be set between a grid division minimum value and a grid division maximum value.

First, the grid division minimum value is set to the transmission duration for one message multiplied by a group coefficient. The group coefficient corresponds to the number of main groups. For example, in Fig. 3, the transmission duration for one message is set to up to 1 ms and the main groups consist of two of the first and second main groups, so the group coefficient is 2, which sets the grid division minimum value to 2 ms (= [1 ms] × 2).

It should be noted that grouping into main groups is not necessarily essential, and only grouping by transmission cycle will do with the group coefficient of 1.

On the other hand, the grid division maximum value is set equal to the greatest common divisor cycle.

Accordingly, for the first main group, the greatest common divisor cycle is 10 ms, which sets the grid division maximum value to 10 ms. For the second main group, the greatest common divisor cycle is 100 ms, which sets the grid division maximum value to 100 ms.

Next, the second grid value setting condition is that the number of the grids must be equal to or more than the number of transmission cycle subgroups in each main group. The number of the grids is the greatest common divisor cycle divided by the transmission grid value. In other words, the second grid value setting condition is that [the greatest common divisor cycle]/[the transmission grid value] ≥ [the number of transmission cycle subgroups] must be satisfied.

Accordingly, for the first main group, 10/[the transmission value] ≥ 5 must be satisfied. Then, rewriting this inequality, the transmission grid value needs to be an integer value that satisfies 10/5 ≥ [the transmission grid value]. Since this transmission grid value appropriately satisfies the above-mentioned grid division minimum value for the first main group, the transmission grid value is also set to 2 ms in the example in Fig. 3.

On the other hand, for the second main group, 100/[the transmission value] ≥ 3 must be satisfied. Then, rewriting this inequality, the transmission grid value needs to be an integer value that satisfies 100/3 ≥ [the transmission grid value].

In the example in Fig. 3, the transmission grid value for the second main group is set to 20 ms so as to satisfy both the first grid value setting condition and the second grid value setting condition. It should be noted that the transmission grid value for the second main group in the example in Fig. 3 may also be set to 25 ms as an integer value that satisfies 100/3 ≥ [the transmission grid value].

Now, the allocation of transmission timing of a message to the thus calculated transmission grid is specifically described. First, the allocation of transmission timing is to be performed for each of the first and second main groups, which can be performed independently of each other.

First, for both the first main group and the second main group, the order of the transmission cycle subgroups for the allocation of transmission timing is not subject to any particular limitation. In the example in Fig. 3, for both the first main group and the second main group, the allocation of transmission timing is performed at intervals of the transmission grid in ascending order of the transmission cycle subgroup numbers.

Also, the order of messages in each transmission cycle subgroups for the allocation of transmission timing is not subject to any particular limitation. In the example in Fig. 3, the allocation of transmission timing is performed in ascending order of the message numbers.

Specifically, for the first main group, the allocation of transmission timing is performed at intervals of the transmission grid for five transmission cycle subgroups, i.e., the transmission cycle subgroups 1, 2, 3, 7 and 8 in this order.

Accordingly, transmission timings are allocated to Msg 1-1, Msg 2-1, Msg 3, Msg 7 and Msg 8 in this order (see Fig. 3). In Fig. 3, the transmission timings are denoted by "x."

Then, the second allocation is performed according to the above-mentioned order of the allocation of transmission timings: Msg 1, Msg 2, Msg 3, Msg 7, then Msg 8. The second allocation is to be performed for a message or messages included in the transmission cycle subgroups including plural messages that are excluded from the first allocation of transmission timings. It should be noted that the messages with the transmission timings already allocated will afterward have their transmission timings set according to their respective transmission cycles with respect to their allocated positions.

Accordingly, while a transmission grid of 10 ms is reserved for five transmission cycle subgroups as with the first allocation sequence, the second allocation is only to allocate Msg 1-2 to 2 ms after the transmission timing of the preceding message Msg 8, in other words, 10 ms after the transmission timing of the preceding message Msg 1-1, and allocate Msg 2-2 to 2 ms after the transmission timing of the message Msg 1-2 (see Fig. 3). So, for the transmission cycle subgroups in which messages have already been allocated, while the allocation of a message to the transmission grid is not performed, the transmission grid itself is reserved similarly to when the allocation of a message is performed. Accordingly, when the allocation of all the messages has been finished and the messages are actually to be transmitted, message transmission will not be performed in a transmission grid with no message allocated as a matter of course, but the same duration of the transmission grid as when a message is allocated surely elapses and then a next transmission starts.

Next, the third allocation is performed.

Specifically, as with the second allocation, first, a transmission grid (10 ms) is reserved for five transmission cycle subgroups. Then, the message Msg 2-3 that has not been allocated is to be allocated to the second transmission grid in the third allocation. In other words, Msg 2-3 is to be allocated to a point at 22 ms after Msg 1-1.

For the first main group, an initial allocation of transmission timing completes for all the messages after the third allocation.

On the other hand, for the second main group, the allocation of transmission timing is performed at intervals of the transmission grid for three transmission cycle subgroups, i.e., the transmission cycle subgroups 4, 5 and 6 in this order. Accordingly, in the example in Fig. 3, each of the transmission cycle subgroups consists of one message, so the allocation of transmission timing is to be performed at intervals of the transmission grid of 20 ms for Msg 4, Msg 5 and Msg 6 in this order.

Next, an operation of transmitting the messages for which the above-described allocation has been performed in the vehicle behavior controlling apparatus S is generally described with reference to Fig. 3.

When the vehicle behavior controlling apparatus S is started and it is time to start transmitting messages, the message Msg 1-1 is first transmitted from the first main group and the message Msg 4 is transmitted from the second main group.

It should be noted that the transmission of the message Msg 1-1 and the transmission of the message Msg 4 are appropriately set by their respective transmitting sections independently of each other. Thus, in the embodiment of the invention, providing plural main groups is substantially equivalent to providing what is called communication paths, in other words, channels allowing transmission of messages independently of one another.

Successively, for the first main group, the messages Msg 2-1, Msg 3, Msg 7, Msg 8, Msg 1-2, Msg 2-2, Msg 2-2 and Msg 2-3 are transmitted in this order in a first transmission.

On the other hand, for the second main group, after the transmission of Msg 4, the messages Msg 5 and Msg 6 are transmitted in this order in the first transmission.

It should be noted that the messages transmitted in the first transmission are to be successively transmitted according to their respective transmission cycles.

The distributed setting of transmission timing of plural messages in the design phase of the apparatus as described above, unlike conventional methods, allows achieving communication load balancing in the CAN bus 2 without providing thereto a dedicated circuit, such as a peripheral circuit for avoiding congestion of messages, and also without requiring high processing capability of a microcomputer used for the electronic controlling units 1-1 to 1-n.

The method for setting transmission timing of messages in accordance with the embodiment of the invention has been described in connection with the configuration in which messages are transmitted and received between the electronic controlling units 1-1 to 1-n through the CAN bus 2. However, the method for setting transmission timing of messages in accordance with the embodiment of the invention is not necessarily limited to such a configuration, but, for example, can also be applied to a configuration in which messages are transmitted and received between plural circuits through a bus within an electronic apparatus, as well as the embodiment of the invention as a matter of course.

### Industrial Applicability

Communication load balancing in transmitting/receiving plural messages through a bus can be achieved by setting communication timing without providing any special peripheral circuit, which can be applied to an apparatus in which messages are transmitted and received using a relatively low-grade microcomputer.

## Claims

1. A method for setting transmission timing of messages by allocating transmission timing to a plurality of messages with predetermined various transmission cycles, the method comprising:
grouping (S300) the messages by transmission cycle into transmission cycle subgroups in each of which the maximum number of messages that can be included is determined by a predetermined criterion for grouping by transmission cycle;
arbitrarily setting an order of the grouped transmission cycle subgroups and arbitrarily setting an order of messages included in each of the transmission cycle subgroups; and
(i) setting (S400) a transmission grid corresponding to the number of the grouped transmission cycle subgroups; (ii) selecting one message according to the set order of the messages, in the set order of the transmission cycle subgroups, based on the transmission grid; (iii) allocating the selected message; and (iv) repeating the steps of (ii) to (iii) until the allocation of the messages of all the transmission cycle subgroups completes, wherein the predetermined criterion for grouping by transmission cycle is that the maximum number of messages that can be included in a transmission cycle subgroup is determined by dividing the transmission cycle of a message included in the transmission cycle subgroup by the greatest common divisor of transmission cycles of a plurality of messages to be grouped,
**characterized in that** the value of the transmission grid is set so as to satisfy both a first grid value setting condition and a second grid value setting condition;
wherein the first grid value setting condition is that the transmission grid value must be set between a grid division minimum value and a grid division maximum value, the grid division minimum value being determined by multiplying the transmission duration of a message by a predetermined group coeffcient, the grid division maximum value being the greatest common divisor of the transmission cycles; and
wherein the second grid value setting condition is that the value determined by dividing the greatest common divisor of the transmission cycles by the transmission grid value must be equal to or more than the number of the transmission cycle subgroups.

2. The method for setting transmission timing of messages according to claim 1, wherein, when the plurality of messages are to be grouped (S100) into main groups using a transmission cycle as a threshold for grouping, the predetermined group coefficient is the number of the main groups, and when the plurality of messages are not to be grouped into main groups, the predetermined group coefficient is 1.

3. The method for setting transmission timing of messages according to claim 2, whereiil, in a vehicle behavior controlling apparatus (S) in which a plurality of electronic controlling units (1-1, 1-n) are provided and the plurality of electronic controlling units (1-1, 1-n) can transmit and receive data through a CAN bus (2), the messages are transmitted and received between the plurality of electronic controlling units (1-1, 1-n) through the CAN bus (2).

## Patentansprüche

1. Verfahren zum Einstellen von Sendezeiteinteilung von Nachrichten durch Zuweisung von Sendezeit zu mehreren Nachrichten mit vorbestimmten verschiedenen Sendezyklen, wobei das Verfahren umfasst:
Gruppieren (S300) der Nachrichten nach Sendezyklen in Sendezyklusuntergruppen, wovon in jeder die maximale Anzahl von Nachrichten, die enthalten sein können, durch ein vorbestimmtes Kriterium zum Gruppieren nach Sendezyklen bestimmt ist;
beliebiges Einstellen einer Reihenfolge der gruppierten Sendezyklusuntergruppen und beliebiges Einstellen einer Reihenfolge von Nachrichten, die in jeder der Sendezyklusuntergruppen enthalten sind; und
(i) Einstellen (S400) eines Senderasters, das der Anzahl der gruppierten Sendezyklusuntergruppen entspricht; (ii) Auswählen einer Nachricht gemäß der eingestellten Reihenfolge der Nachrichten in der eingestellten Reihenfolge der Sendezyklusuntergruppen basierend auf dem Senderaster; (iii) Zuweisen der ausgewählten Nachricht; und (iv) Wiederholen der Schritte von (ii) bis (iii), bis die Zuweisung der Nachrichten aller Sendezyklusuntergruppen fertiggestellt ist, wobei das vorbestimmte Kriterium zum Gruppieren nach Sendezyklen ist, dass die maximale Anzahl von Nachrichten, die in einer Sendezyklusuntergruppe enthalten sein können, durch Teilen des Sendezyklus einer Nachricht, die in der Sendezyklusuntergruppe enthalten ist, durch den größten gemeinsamen Teiler von Sendezyklen mehrerer Nachrichten, die gruppiert werden sollen, bestimmt wird,
**dadurch gekennzeichnet, dass** der Wert des Senderasters so eingestellt ist, dass er sowohl eine erste Rasterwerteinstellbedingung als auch eine zweite Rasterwerteinstellbedingung erfüllt;
wobei die erste Rasterwerteinstellbedingung ist, dass das der Senderasterwert zwischen einem minimalen Rasterteilwert und einem maximalen Rasterteilwert eingestellt sein muss, wobei der minimale Rasterteilwert durch Multiplizieren der Sendedauer einer Nachricht mit einem vorbestimmten Gruppenkoeffizienten bestimmt wird, wobei der maximale Rasterteilwert der größte gemeinsame Teiler der Sendezyklen ist; und
wobei die zweite Rasterwerteinstellbedingung ist, dass der Wert, der durch Dividieren des größten gemeinsamen Teilers der Sendezyklen durch den Senderasterwert gleich der oder größer als die Anzahl der Sendezyklusuntergruppen sein muss.

2. Verfahren zum Einstellen von Sendezeiteinteilung von Nachrichten nach Anspruch 1, wobei dann, wenn die mehreren Nachrichten in Hauptgruppen unter Verwendung eines Sendezyklus als einen Schwellenwert zum Gruppieren gruppiert werden sollen (S100), der vorbestimmte Gruppenkoeffizient die Anzahl der Hauptgruppen ist, und wenn die mehreren Nachrichten nicht in Hauptgruppen gruppiert werden sollen, der vorbestimmte Gruppenkoeffizient 1 ist.

3. Verfahren zum Einstellen von Sendezeiteinteilung von Nachrichten nach Anspruch 2, wobei in einer Fahrzeugverhaltens-Steuervorrichtung (S), in der mehrere elektronische Steuereinheiten (1-1, 1-n) bereitgestellt sind und die mehreren elektronischen Steuereinheiten (1-1, 1-n) Daten über einen CAN-Bus (2) senden und empfangen können, die Nachrichten zwischen den mehreren elektronischen Steuereinheiten (1-1, 1-n) über den CAN-Bus (2) gesendet und empfangen werden.

## Revendications

1. Procédé destiné à permettre d'ajuster le temps de transmission de messages en attribuant un temps de transmission à un ensemble de messages avec différents cycles de transmission prédéfinis, ce procédé comprenant des étapes consistant à :
regrouper (S300) les messages par cycles de transmission dans des sous-groupes de cycles de transmission dans chacun desquels le nombre maximum de messages pouvant être renfermés est déterminé par un critère de regroupement prédéfini par cycle de transmission,
ajuster arbitrairement l'ordre des sous-groupes de cycles de transmission regroupés et ajuster arbitrairement l'ordre des messages renfermés dans chacun des sous-groupes de cycles de transmission, et
(i) ajuster (S400) une grille de transmission correspondant au nombre de sous-groupes de cycles de transmission regroupés, (ii) sélectionner un message sur le fondement de l'ordre des messages ajusté, dans l'ordre ajusté des sous-groupes de cycles de transmission, à partir de la grille de transmission, (iii) attribuer le message sélectionné et (iv) répéter les étapes (ii) à (iii) jusqu'à ce que l'attribution des messages de tous les sous-groupes de cycles de transmission soit achevée, le critère de regroupement prédéfini par cycles de transmission étant que le nombre maximum de messages pouvant être renfermés dans un sous-groupe de cycles de transmission soit déterminé en divisant le cycle de transmission d'un message renfermé dans le sous-groupe de cycles de transmission par le plus grand commun diviseur des cycles de transmission d'un ensemble de messages devant être regroupés,
**caractérisé en ce que**
la valeur de la grille de transmission est ajustée de façon à satisfaire à la fois à une première condition d'ajustement de la valeur de grille et à une seconde condition d'ajustement de valeur de grille,
la première condition d'ajustement de la valeur de grille étant que la valeur de la grille de transmission doit être ajustée entre une valeur minimum de division de la grille et une valeur maximum de division de la grille, la valeur minimum de division de la grille étant déterminée en multipliant la durée de transmission d'un message par un coefficient de groupe prédéfini, la valeur maximum de division de la grille étant le plus commun diviseur des cycles de transmission, et
la seconde condition d'ajustement de la valeur de grille étant que la valeur déterminée en divisant le plus grand commun diviseur des cycles de transmission par la valeur de la grille de transmission doit être égale ou supérieure au nombre de sous-groupes de cycles de transmission.

2. Procédé conforme à la revendication 1, selon lequel lorsque les messages de l'ensemble de messages doivent être regroupés (S100) dans des groupes principaux en utilisant un cycle de transmission en tant que seuil de regroupement, le coefficient de groupe prédéfini est le nombre de groupes principaux, et lorsque les messages de l'ensemble de messages ne doivent pas être regroupés dans des groupes principaux, le coefficient de groupe prédéfini est égal à 1.

3. Procédé conforme à la revendication 2, selon lequel, dans un appareil de commande de conduite d'un véhicule (S) dans lequel sont prévues plusieurs unités de commande électroniques (1-1, 1-n) et ces unités de commande électroniques (1-1, 1-n) peuvent transmettre et recevoir des données par l'intermédiaire d'un bus CAN (2), les messages sont transmis et reçus entre les unités de l'ensemble d'unités de commande électroniques (1-1, 1-n) par l'intermédiaire du bus CAN (2).
